# FASCICULE DE BREVET EUROPEEN

(11) **EP 1 912 776 B1**
(45) Date de publication et mention de la délivrance du brevet: **09.11.2016**
(21) Numéro de dépôt: 06777749.0
(22) Date de dépôt: 13.07.2006
(51) Int. Cl.: B29C 49/58, B29C 49/06, B29C 49/12, B29K 67/00

(54) **INSTALLATION ET PROCÉDÉ DE SOUFFLAGE COMPORTANT UNE TUYÈRE ÉQUIPÉE D'UN JOINT D'ÉTANCHÉITÉ À LÈVRE**
BLASANLAGE UND BLASVERFAHREN MIT EINER DÜSE MIT EINER LIPPENDICHTUNG
BLOWING PLANT BLOW MOULDING PROCESS COMPRISING A NOZZLE PROVIDED WITH A LIP SEALING JOINT

(30) Priorité: 12.08.2005 FR 0552509
(43) Date de publication de la demande: 23.04.2008
(73) Titulaire: Sidel Participations, 76930 Octeville Sur Mer (FR)
(72) Inventeur: DANEL, Laurent, F-76930 Octeville sur Mer (FR)
(74) Mandataire: Siloret, Patrick
(86) Numéro de dépôt international: PCT/EP2006/064188
(87) Numéro de publication internationale: WO 2007/020137

(56) Documents cités:
- FR-A- 2 764 544
- FR-A- 2 833 512
- US-A- 4 552 527

## Description

L'invention concerne une installation de soufflage d'un fluide sous pression dans une ébauche.

L'invention concerne plus particulièrement une installation de soufflage d'un fluide sous pression dans une ébauche, notamment dans une ébauche de récipient en PET, qui comporte :
- un moule inférieur qui est destiné à loger l'ébauche, et qui comporte une paroi supérieure horizontale comportant un orifice d'insertion à travers lequel un col supérieur de l'ébauche est destiné à faire saillie ;
- une tuyère supérieure qui comporte un orifice inférieur de sortie du fluide sous pression qui est destiné à souffler le fluide sous pression dans l'ébauche par l'intermédiaire du col (16), et qui comporte un joint annulaire d'étanchéité qui est agencé sous le pourtour inférieur de l'orifice de sortie ;
   du type dans lequel le pourtour de l'orifice de sortie est destiné à être positionné en vis-à-vis d'une paroi d'appui en entourant le col de l'ébauche, le joint d'étanchéité étant appuyé contre la paroi d'appui pour empêcher le fluide sous pression de fuir entre le pourtour (44) de l'orifice de sortie (34) de la tuyère (22) et la face d'appui (18, 24).

Ce type d'installation est notamment utilisé pour la fabrication de récipients, par exemple de bouteilles, en matériau plastique à partir d'ébauches, aussi appelées préformes. Les ébauches sont conformées en bouteille par une opération de soufflage et, éventuellement, par une opération simultanée d'étirage.

Préalablement à l'opération de soufflage, les préformes sont chauffées pour ramollir le matériau qui les constitue. Ces préformes préchauffées sont ensuite agencées dans un moule dont l'empreinte a la forme de la bouteille finale.

Enfin, un fluide sous pression, tel que de l'air, est injecté à l'intérieur de la préforme par l'intermédiaire d'une tuyère de soufflage. Le fluide sous pression déforme le corps de la préforme à la manière d'un ballon qu'on gonfle afin que la préforme épouse les contours de l'empreinte du moule pour former la bouteille définitive.

On connaît déjà des tuyères de soufflage du type dit "cloche". Dans ce type de tuyère, l'orifice de sortie d'extrémité aval de la tuyère est conformé en cloche. Le pourtour de l'orifice de sortie est plaqué contre le moule de manière à entourer le col de la préforme. Ainsi, le col de la préforme est englobé par la cloche.

Lors du soufflage, l'espace compris radialement entre le col de la préforme et la cloche est rempli de fluide sous pression.

Il est connu, par exemple par les documents FR-A-2.833.512 ou FR-A-2.764.544, d'agencer un joint d'étanchéité sous le pourtour de l'orifice de sortie de la tuyère de manière que, lorsque la tuyère injecte le fluide sous pression à l'intérieur de la préforme, le fluide sous pression ne fuie pas entre la face d'appui du moule et le pourtour de la tuyère.

Pour que le fluide ne fuie pas, le pourtour de l'orifice de sortie est appuyé sur la face d'appui du moule par l'intermédiaire du joint d'étanchéité. Le pourtour de la tuyère est fortement appuyé contre la face d'appui du moule de manière à presser le joint d'étanchéité avec une force supérieure à celle produite par le fluide sous pression contre le joint d'étanchéité.

La force que doit exercer la tuyère contre la face d'appui du moule nécessite un actionneur puissant, encombrant et onéreux.

De plus, le moule et la tuyère étant soumis à des forces d'une très grande intensité, ils doivent être fixés de manière renforcée à l'installation de soufflage. Ces moyens de fixation renforcés sont onéreux, lourds et encombrants.

Afin de résoudre ces problèmes, l'invention propose une tuyère du type décrit précédemment, caractérisée en ce que le joint d'étanchéité comporte au moins une première lèvre annulaire inférieure souple qui s'étend radialement vers l'intérieur de l'orifice de sortie, de manière que le fluide sous pression appuie sur une face supérieure de la lèvre pour plaquer le bord intérieur libre de la lèvre annulaire contre la paroi d'appui pour assurer l'étanchéité de la tuyère.

Selon d'autres caractéristiques de l'invention :
- la paroi d'appui est formée par une collerette qui s'étend horizontalement autour du col de l'ébauche ;
- la paroi d'appui est formée par la paroi supérieure du moule ;
- le joint d'étanchéité comporte une deuxième lèvre annulaire supérieure qui est agencée parallèlement au-dessus de la première lèvre inférieure et qui est raccordée à la première lèvre inférieure par l'intermédiaire d'une jante périphérique extérieure du joint ;
- la section radiale du joint d'étanchéité a une forme de "U" dont l'ouverture qui est dirigée radialement vers l'intérieur de la tuyère, est bordée verticalement par la première lèvre inférieure et par la deuxième lèvre supérieure ;
- la face intérieure cylindrique de la tuyère comporte une gorge annulaire dans laquelle est logé le joint d'étanchéité ;
- une portion annulaire extérieure de la face inférieure de la première lèvre inférieure est appuyée contre une paroi inférieure de la gorge annulaire.
- le bord circulaire intérieur libre de la première lèvre inférieure forme une saillie annulaire qui s'étend verticalement vers le bas par rapport à une face inférieure de la tuyère et qui est destinée à être appuyée contre la paroi d'appui lorsque le fluide sous pression appuie sur la face supérieure de la première lèvre inférieure.

L'invention concerne aussi un procédé de soufflage mettant en oeuvre une installation de soufflage réalisée selon l'invention, caractérisé en ce que, dans une position basse de soufflage de la tuyère dans laquelle la portion annulaire intérieure de la face inférieure est en appui contre la face d'appui du moule, le pourtour de l'orifice de sortie est positionné au-dessus de la face d'appui du moule de manière qu'il subsiste un jeu vertical entre la face inférieure de la tuyère et la face d'appui du moule.

Selon une autre caractéristique du procédé, lorsque la tuyère est en position basse de soufflage et qu'elle ne souffle pas de fluide sous pression, il subsiste un jeu vertical entre le joint (40) et la face d'appui (24) du moule (20).

D'autres caractéristiques et avantages apparaîtront au cours de la lecture de la description détaillée qui va suivre pour la compréhension de laquelle on se reportera aux dessins annexés parmi lesquels :
- la figure 1 est une vue en coupe axiale qui représente une installation de soufflage réalisée selon l'invention dans laquelle une tuyère de soufflage est dans une position haute de repos par rapport à un moule ;
- la figure 2 est une vue en coupe axiale qui représente l'installation de soufflage de la figure 1 et dans laquelle la tuyère est dans une position basse de soufflage ;
- la figure 3 est une vue en coupe axiale à plus grande échelle qui représente le joint d'étanchéité de la tuyère de la figure 2 ;
- la figure 4 est une vue similaire à celle de la figure 3 dans laquelle la tuyère émet un fluide sous pression qui presse une lèvre inférieure du joint d'étanchéité contre le moule ;
- la figure 5 est une vue similaire à celle de la figure 3 qui représente une variante de l'invention
- la figure 6 est une vue similaire à celle de la figure 3 qui représente une variante de l'invention.

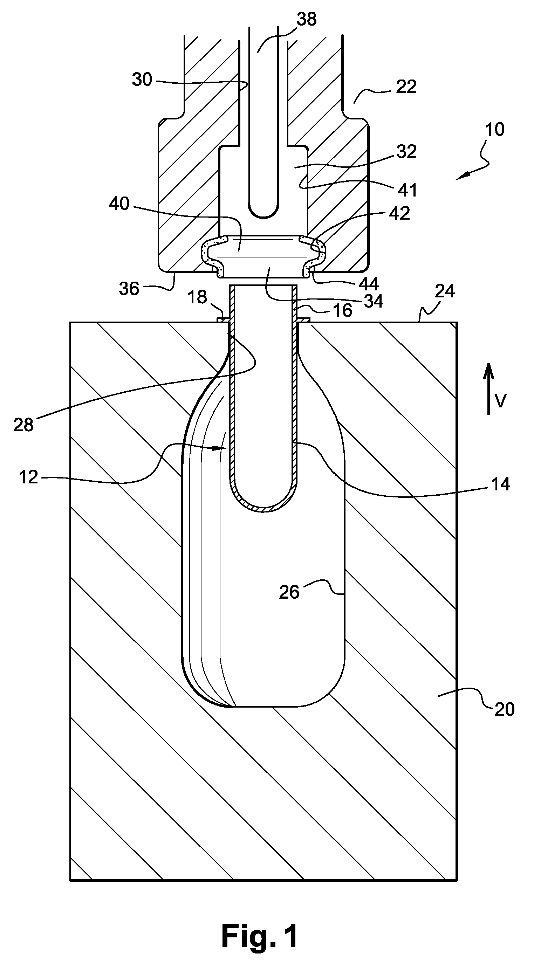

Pour la suite de la description, on adoptera, à titre non limitatif, une orientation verticale qui est dirigée du bas vers le haut, et qui est indiquée par la flèche V de la figure 1. Un plan perpendiculaire à cette direction sera dit "horizontal".

Par la suite, des éléments identiques, analogues ou similaires seront désignés par des mêmes numéros de référence.

On a représenté à la figure 1 une installation de soufflage 10 pour obtenir par soufflage des récipients, et notamment des bouteilles, à partir d'une préforme 12 réalisée en matériau plastique, par exemple en polyéthylène téréphtalate (PET).

Comme représenté à la figure 1, la préforme 12 comporte un corps 14 inférieur qui a ici la forme d'un tube cylindrique dont l'extrémité inférieure est fermée.

L'extrémité supérieure de la préforme 12 est ouverte par l'intermédiaire d'un col 16 supérieur dont la face cylindrique externe comporte un filetage (non représenté). Une collerette 18 s'étend radialement en saillie depuis la face cylindrique externe du col 16. La collerette 18 délimite verticalement le col 16 par rapport au corps 14 de la préforme 12.

Le corps 14 de la préforme 12 est destiné à être déformé par soufflage de manière à être conformé en récipient final. A cet effet, le corps 14 de la préforme 12 est ramolli par chauffage avant d'être soumis à l'opération de soufflage.

Le col 16 de la préforme 12 a déjà sa forme définitive, il n'est donc pas soumis à l'opération de soufflage.

L'installation de soufflage 10 comporte principalement un moule 20 et une tuyère 22.

De manière connue, le moule 20 est formé d'un bloc de matière qui est délimité supérieurement par une paroi supérieure 24 horizontale. Une cavité 26 est réservée à l'intérieur du moule 20. La cavité 26 débouche dans la paroi supérieure 24 du moule 20 par l'intermédiaire d'un orifice d'insertion 28.

Le corps 14 de la préforme 12 de récipient en matériau plastique est inséré dans la cavité 26 du moule 20 par l'intermédiaire de l'orifice d'insertion 28.

Seul le corps 14 de la préforme 12 est inséré à l'intérieur de la cavité 26 tandis que le col 16 demeure à l'extérieur du moule 20. A cet effet, le contour de l'orifice d'insertion 28 est dimensionné pour laisser passer le corps 14 de la préforme 12, mais il n'est pas assez grand pour laisser passer la collerette 18 de la préforme 12.

La collerette 18 forme ainsi une butée qui est en appui sur la paroi supérieure 24 du moule 20 de manière à empêcher la préforme 12 de tomber dans la cavité 26. Le col 16 fait ainsi saillie vers le haut par rapport à la paroi supérieure 24 du moule 20.

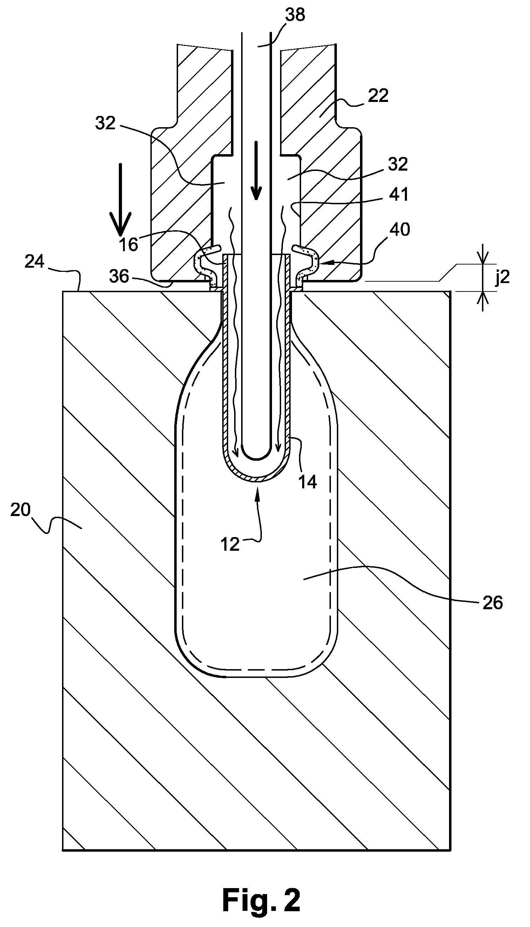

La cavité 26 du moule 20 forme l'empreinte du récipient définitif que le corps de la préforme 22 est destiné à épouser, comme représenté en traits interrompus à la figure 2.

La tuyère 22 est agencée verticalement au-dessus de la paroi supérieure 24 du moule 20, au droit du col 16 de la préforme 12.

La tuyère 22 comporte une conduite d'alimentation 30 en fluide sous pression d'axe vertical. Un tronçon d'extrémité inférieure aval de la conduite d'alimentation 30 est évasé vers le bas en forme de cloche jusqu'à un orifice de sortie 34 du fluide sous pression. Ce tronçon sera par la suite appelé cloche 32.

Le pourtour 44 de l'orifice de sortie 34 est apte à entourer le col 16 de la préforme 12 de manière que le col 16 soit totalement recouvert par la cloche 32.

L'extrémité inférieure de la tuyère 22 est délimitée par une face inférieure 36 horizontale qui est agencée en vis-à-vis de la paroi supérieure 24 du moule 20.

La tuyère 22 comporte ici une tige d'étirage 38 d'axe vertical qui est montée coulissante verticalement à l'intérieur de la conduite d'alimentation 30. La tige d'étirage 38 est destinée à venir appuyer sur le fond du corps 14 de la préforme 12 afin permettre une bonne répartition de la matière plastique formant le corps du récipient final lors de l'opération de soufflage.

De manière connue la tuyère 22 est montée coulissante entre une position haute de repos qui est représentée à la figure 1, et une position basse de soufflage dans laquelle le col 16 de la préforme 12 est englobé à l'intérieur de la cloche 32 qui est représentée à la figure 2.

Lorsque la tuyère 22 est dans sa position basse de soufflage, l'opération de soufflage est réalisée. Un fluide sous pression est alors soufflé vers le bas à travers l'orifice de sortie 34 de manière à pénétrer à l'intérieur de la préforme 12 par l'intermédiaire du col 16 pour déformer le corps 14 de la préforme 12 afin qu'il épouse l'empreinte de la cavité 18 du moule 20.

Il subsiste un espace radial entre le col 16 et la cloche 32. Cet espace radial est rempli de fluide sous pression lors de l'opération de soufflage.

Selon les enseignements de l'invention, la tuyère 22 comporte un joint annulaire d'étanchéité 40 qui est agencé sous le pourtour de l'orifice de sortie 34 de la tuyère 22.

De manière connue, le joint annulaire d'étanchéité 40 est réalisé en matériau élastomère.

Le joint annulaire d'étanchéité 40 est destiné à empêcher les fuites de fluide sous pression entre le pourtour 44 de l'orifice de sortie 34 et la paroi supérieure 24 du moule 20 lorsque la tuyère 22 est en position basse de soufflage.

La paroi cylindrique intérieure 41 de la cloche 32 comporte une gorge 42 annulaire qui est agencée à proximité du pourtour 44 de l'orifice de sortie 34. La gorge 42 est destinée à loger le joint annulaire d'étanchéité 40.

La gorge 42 est ouverte radialement vers l'intérieur de l'orifice de la cloche 32. Elle est délimitée radialement vers l'extérieure par un fond 43 vertical et elle est délimitée verticalement par une paroi inférieure 45 globalement horizontale vers le bas et par une paroi supérieure 47 globalement horizontale vers le haut.

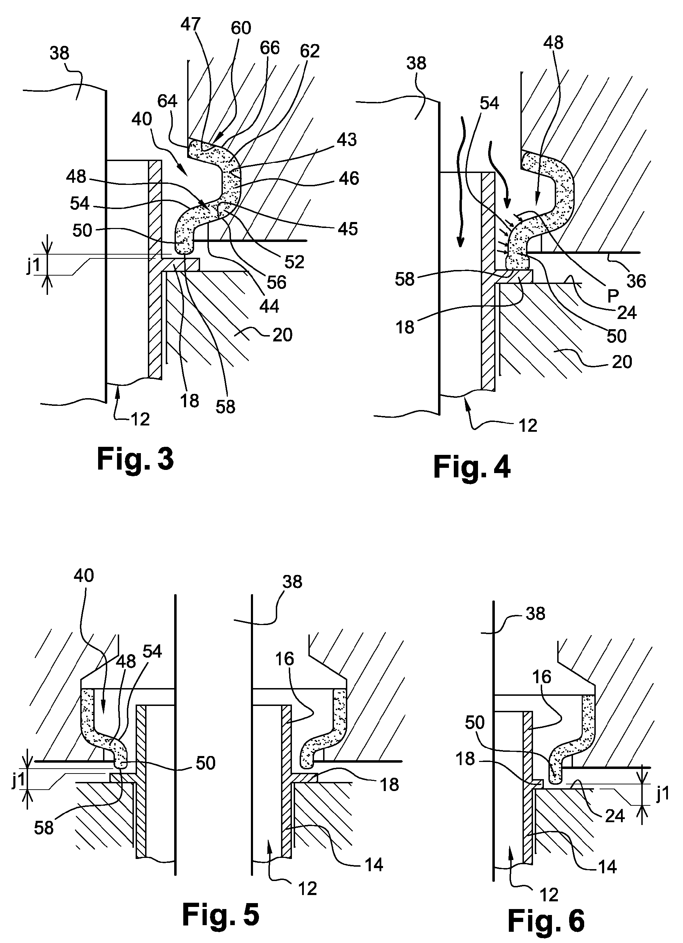

Comme représenté à la figure 3, le joint annulaire d'étanchéité 40 comporte une jante 46 périphérique annulaire extérieure qui est agencée contre le fond 43 de la gorge 42.

Le joint annulaire d'étanchéité 40 comporte aussi une première lèvre inférieure 48 annulaire qui s'étend radialement depuis un bord circulaire d'extrémité inférieure de la jante 46 vers l'intérieur de l'orifice de sortie 34. La première lèvre inférieure 48 comporte un bord circulaire intérieur libre 50 tandis que son bord circulaire extérieur 52 est formé venu de matière avec le bord circulaire inférieur de la jante 46.

La première lèvre inférieure 48 est souple, c'est-à-dire qu'elle peut se déformer élastiquement de manière que le bord circulaire intérieur libre 50 se déplace verticalement autour de sa position d'équilibre tandis que le bord circulaire extérieur 52 demeure immobile.

La première lèvre inférieure 48 comporte une face supérieure 54 globalement horizontale qui est exposée au fluide sous pression soufflé par la tuyère 22.

La face inférieure de la première lèvre inférieure 48 est agencée en porte-à-faux sur la paroi inférieure 45 de la gorge 42. Ainsi, une portion annulaire extérieure de la face inférieure 56 est en appui sur une surface inférieure horizontale de la gorge 42. Une portion annulaire intérieure de la face inférieure 58 de la première lèvre inférieure 48, qui est adjacente au bord circulaire intérieur libre 50 n'est pas en appui.

La portion annulaire intérieure de la face inférieure 58 est destinée à être appuyée contre une paroi d'appui de manière à empêcher le fluide sous pression de fuir. Comme représenté aux figures 2, 3 et 4, la portion annulaire intérieure de la face inférieure 58 de la première lèvre inférieure 48 est ici en appui sur la face supérieure de la collerette 18 de la préforme 12 qui forme ici la paroi d'appui.

Selon une variante qui est représentée à la figure 6, la portion annulaire intérieure de la face inférieure 58 est destinée à être appuyée directement contre la paroi supérieure 24 du moule 20 qui forme alors la paroi d'appui. La portion annulaire intérieure de la face inférieure 58 entoure alors la collerette 18 de la préforme 12.

Le bord circulaire intérieur libre 50 de la première lèvre inférieure 48 comporte ici une saillie annulaire qui s'étend verticalement vers le bas de manière que la portion annulaire de la portion annulaire intérieure de la face inférieure 58 de la première lèvre inférieure 48 fasse saillie verticalement vers le bas par rapport à la face inférieure 36 de la tuyère 22.

Avantageusement, comme représenté aux figures 1 à 4, le joint annulaire d'étanchéité 40 comporte une deuxième lèvre supérieure 60 annulaire. La deuxième lèvre supérieure 60 s'étend radialement depuis le bord circulaire d'extrémité supérieure 62 de la jante 46 vers l'intérieur de l'orifice de sortie 34.

Le joint annulaire d'étanchéité 40 comporte donc une rainure annulaire qui est délimitée par la première lèvre inférieure 48, par la deuxième lèvre supérieure 60 et par la jante 46.

Ainsi, comme représenté aux figures 3 et 4, la section radiale axiale du joint d'étanchéité forme un "U" dont l'ouverture est orientée radialement vers l'intérieur de l'orifice de sortie 34, l'ouverture du "U" étant bordée inférieurement par la première lèvre inférieure 48 et supérieurement par la deuxième lèvre supérieure 60.

La deuxième lèvre supérieure 60 comporte un bord circulaire intérieur libre 64. La face supérieure 66 de la deuxième lèvre supérieure 60 est en appui contre la paroi supérieure 47 en vis-à-vis de la gorge 42.

Le bord circulaire intérieur libre 64 affleure la paroi cylindrique intérieure 41 de la cloche 32. Ainsi, la face supérieure 66 de la deuxième lèvre supérieure 60 n'est pas exposée à la pression du fluide sous pression lorsque la tuyère 22 est en position basse de soufflage.

Selon une variante de l'invention qui est représentée à la figure 5, le joint annulaire d'étanchéité 40 ne comporte que la première lève inférieure 48.

Cependant, les inventeurs ont constaté que, de manière surprenante, la présence d'une deuxième lèvre supérieure 60 formant une rainure circulaire dans le joint annulaire d'étanchéité 40 permettait d'obtenir une force d'appui de la première lèvre inférieure 48 contre la collerette 18 plus forte qu'avec une seule lèvre.

On décrit maintenant le fonctionnement d'une telle installation de soufflage 10.

Comme représenté à la figure 1, lorsque la tuyère 22 est en position de repos, la face inférieure 36 de la tuyère 22 est agencée à distance au dessus de la paroi supérieure 24 du moule 20, et l'orifice de sortie 34 est agencé au droit du col 16 de la préforme 12.

Puis la tuyère 22 est descendue vers sa position basse de soufflage comme représenté à la figure 2. Comme représenté plus en détail à la figure 3, lorsque la tuyère 22 est en position basse de soufflage et qu'elle ne souffle pas de fluide sous pression, la portion annulaire intérieure de la face inférieure 58 de la première lèvre 48 est agencée à proximité de la collerette 18 de la préforme 12 de manière qu'il subsiste un faible jeu "j1" entre le joint 40 et la collerette 18.

Avantageusement, il subsiste un deuxième jeu "j2" entre la face inférieure 36 de la tuyère 22 et la paroi supérieure 24 du moule 20. Ce deuxième jeu "j2" est réservé grâce à la portion annulaire intérieure de la face inférieure 58 de la première lèvre inférieure 48 qui est en saillie. En évitant tout contact entre ces deux surfaces, l'usure du moule 20 et de la tuyère 22 est empêchée.

Le joint annulaire d'étanchéité 40 entoure ainsi le col 16 de la préforme 12 de manière qu'un espace radial subsiste.

Puis la tuyère injecte du fluide sous pression à l'intérieur de la préforme 12 par l'intermédiaire du col 16.

Comme représenté à la figure 4, lorsque le fluide sous pression est soufflé, une partie du fluide sous pression s'accumule dans l'espace délimité radialement par le joint annulaire d'étanchéité 40 et le col 16. Le fluide sous pression appui sur la face supérieure 54 de la première lèvre inférieure 48 comme représenté par les flèches "P" de la figure 4.

La pression déforme la première lèvre inférieure 48 de manière que la portion annulaire intérieure de la face inférieure 58 de la première lèvre inférieure 48 soit fortement pressée contre la collerette 18. La pression exercée par le fluide sous pression sur la première lèvre inférieure lèvre 48 permet d'obtenir une étanchéité suffisante pour le fluide sous pression ne fuie pas radialement vers l'extérieur entre la face inférieure 36 de la tuyère 22 et la paroi supérieure 24 du moule 20.

Simultanément à l'opération de soufflage, la tige d'étirage 38 est coulissée verticalement vers le bas de manière qu'elle appuie contre le fond de la préforme 12 afin d'étirer verticalement vers le bas le corps 14 de la préforme 12.

Grâce à l'installation de soufflage réalisée selon les enseignements de l'invention, il n'est plus nécessaire d'appuyer la tuyère 22 fortement contre le moule 20 pour empêcher le fluide sous pression de fuir hors de la tuyère 22.

## Revendications

1. Installation de soufflage (10) d'un fluide sous pression dans une ébauche (12), notamment dans une ébauche de récipient en PET, qui comporte :
- un moule (20) inférieur qui est destiné à loger l'ébauche (12), et qui comporte une paroi supérieure (24) horizontale comportant un orifice d'insertion (28) à travers lequel un col (16) supérieur de l'ébauche (12) est destiné à faire saillie ;
- une tuyère (22) supérieure qui comporte un orifice inférieur de sortie (34) du fluide sous pression qui est destiné à souffler le fluide sous pression dans l'ébauche par l'intermédiaire du col (16), et qui comporte un joint annulaire d'étanchéité (40) qui est agencé sous le pourtour (44) inférieur de l'orifice de sortie (34) ;
du type dans lequel le pourtour (44) de l'orifice de sortie (34) est destiné à être positionné en vis-à-vis d'une paroi d'appui (18, 24) en entourant le col (16) de l'ébauche (12), le joint d'étanchéité (40) étant appuyé contre la paroi d'appui (18, 24) pour empêcher le fluide sous pression de fuir entre le pourtour (44) de l'orifice de sortie (34) de la tuyère (22) et la face d'appui (18, 24),
**caractérisée en ce que** le joint d'étanchéité (40) comporte au moins une première lèvre annulaire inférieure (48) souple qui s'étend radialement vers l'intérieur de l'orifice de sortie (34), de manière que le fluide sous pression appuie sur une face supérieure (54) de la lèvre (48) pour plaquer le bord circulaire intérieur libre (58) de la lèvre annulaire (48) contre la paroi d'appui (18, 24) pour assurer l'étanchéité de la tuyère (22).

2. Installation de soufflage (10) selon la revendication précédente, **caractérisée en ce que** la paroi d'appui est formée par une collerette (18) qui s'étend horizontalement autour du col (16) de l'ébauche (12).

3. Installation de soufflage (10) selon la revendication 1, **caractérisée en ce que** la paroi d'appui est formée par la paroi supérieure (24) du moule (20).

4. Installation de soufflage (10) selon l'une quelconque des revendications précédentes, **caractérisée en ce que** le joint d'étanchéité (40) comporte une deuxième lèvre annulaire supérieure (60) qui est agencée parallèlement au-dessus de la première lèvre inférieure (48) et qui est raccordée à la première lèvre inférieure (48) par l'intermédiaire d'une jante (46) périphérique extérieure du joint (40).

5. Installation de soufflage (10) selon la revendication précédente, **caractérisée en ce que** la section radiale du joint d'étanchéité (40) a une forme de "U" dont l'ouverture qui est dirigée radialement vers l'intérieur de la tuyère (22), est bordée verticalement par la première lèvre inférieure (48) et par la deuxième lèvre supérieure (60).

6. Installation de soufflage (10) selon l'une quelconque des revendications précédentes, **caractérisée en ce que** la face intérieure cylindrique (41) de la tuyère (22) comporte une gorge (42) annulaire dans laquelle est logé le joint d'étanchéité (40).

7. Installation de soufflage (10) selon la revendication précédente, **caractérisée en ce qu'**une portion annulaire extérieure de la face inférieure (56) de la première lèvre inférieure (48) est appuyée contre une paroi inférieure (45) de la gorge (42) annulaire.

8. Installation de soufflage (10) selon la revendication précédente, **caractérisée en ce que** le bord circulaire intérieur libre (50) de la première lèvre inférieure (48) forme une saillie annulaire qui s'étend verticalement vers le bas par rapport à une face inférieure (36) de la tuyère (22) et qui est destinée à être appuyée contre la paroi d'appui (18, 24) lorsque le fluide sous pression appuie sur la face supérieure (54) de la première lèvre inférieure (48).

9. Procédé de soufflage mettant en oeuvre une installation de soufflage (10) réalisée selon l'une quelconque des revendications précédentes, **caractérisé en ce que**, dans une position basse de soufflage de la tuyère (22) dans laquelle la portion annulaire intérieure de la face inférieure (58) est en appui contre la face d'appui (24) du moule (20), le pourtour (44) de l'orifice de sortie (34) est positionné au-dessus de la face d'appui du moule de manière qu'il subsiste un jeu vertical entre la face inférieure (36) de la tuyère (22) et la face d'appui (24) du moule (20).

10. Procédé de soufflage selon la revendication précédente, **caractérisé en ce que**, lorsque la tuyère (22) est en position basse de soufflage et qu'elle ne souffle pas de fluide sous pression, il subsiste un jeu vertical (j1) entre le joint (40) et la face d'appui (24) du moule (20).

## Patentansprüche

1. Anlage zum Blasen (10) eines Fluids unter Druck in einen Rohling (12), insbesondere in einen PET-Behälter-Rohling, die aufweist:
- eine untere Form (20), die dazu bestimmt ist, den Rohling (12) aufzunehmen, und die eine obere horizontale Wand (24) aufweist, welche eine Einführöffnung (28) aufweist, durch die ein oberer Kragen (16) des Rohlings (12) hervorzuragen bestimmt ist;
- eine obere Düse (22), die eine untere Öffnung zum Auslass (34) des Fluids unter Druck, die dazu bestimmt ist, das Fluid unter Druck über den Kragen (16) in den Rohling zu blasen, aufweist, und die eine Ringdichtung (40), die unter dem unteren Umfang (44) der Öffnung zum Auslass (34) ausgebildet ist, aufweist;
vom Typ, bei dem der Umfang (44) der Öffnung zum Auslass (34) dazu bestimmt ist, gegenüber einer Abstützwand (18, 24), den Kragen (16) des Rohlings (12) umgebend, positioniert zu werden, wobei die Dichtung (40) gegen die Abstützwand (18, 24) abgestützt ist, um zu verhindern, dass das Fluid unter Druck zwischen dem Umfang (44) der Öffnung zum Auslass (34) der Düse (22) und der Abstützseite (18, 24) entweicht,
**dadurch gekennzeichnet, dass** die Dichtung (40) mindestens eine erste flexible untere Ringlippe (48) aufweist, die sich radial hin zum Inneren der Öffnung zum Auslass (34) erstreckt, sodass das Fluid unter Druck gegen eine Oberseite (54) der Lippe (48) drückt, um den freien kreisförmigen Innenrand (58) der Ringlippe (48) gegen die Abstützwand (18, 24) zu pressen, um die Abdichtung der Düse (22) sicherzustellen.

2. Anlage zum Blasen (10) nach dem vorangehenden Anspruch, **dadurch gekennzeichnet, dass** die Abstützwand durch einen Bund (18), der sich horizontal um den Kragen (16) des Rohlings (12) erstreckt, gebildet wird.

3. Anlage zum Blasen (10) nach Anspruch 1, **dadurch gekennzeichnet, dass** die Abstützwand durch die obere Wand (24) der Form (20) gebildet wird.

4. Anlage zum Blasen (10) nach einem der vorangehenden Ansprüche, **dadurch gekennzeichnet, dass** die Dichtung (40) eine zweite obere Ringlippe (60) aufweist, die parallel über der ersten unteren Lippe (48) ausgebildet ist und die mit der ersten unteren Lippe (48) über einen äußeren Umfangskranz (46) der Dichtung (40) verbunden ist.

5. Anlage zum Blasen (10) nach dem vorangehenden Anspruch, **dadurch gekennzeichnet, dass** der radiale Schnitt der Dichtung (40) eine U-Form besitzt, deren Öffnung, die radial zum Inneren der Düse (22) hin gerichtet ist, senkrecht durch die erste untere Lippe (48) und durch die zweite obere Lippe (60) begrenzt ist.

6. Anlage zum Blasen (10) nach einem der vorangehenden Ansprüche, **dadurch gekennzeichnet, dass** die zylindrische Innenseite (41) der Düse (22) eine Ringkehle (42), in der die Dichtung (40) sitzt, aufweist.

7. Anlage zum Blasen (10) nach dem vorangehenden Anspruch, **dadurch gekennzeichnet, dass** ein äußerer Ringabschnitt der Unterseite (56) der ersten unteren Lippe (48) gegen eine untere Wand (45) der Ringkehle (42) abgestützt ist.

8. Anlage zum Blasen (10) nach dem vorangehenden Anspruch, **dadurch gekennzeichnet, dass** der freie kreisförmige Innenrand (50) der ersten unteren Lippe (48) einen ringförmigen Vorsprung bildet, der sich bezogen auf eine Unterseite (36) der Düse (22) senkrecht nach unten erstreckt und der dazu bestimmt ist, gegen die Abstützwand (18, 24) abgestützt zu sein, wenn das Fluid unter Druck gegen die Oberseite (54) der ersten unteren Lippe (48) drückt.

9. Blasverfahren unter Einsatz einer Anlage zum Blasen (10), die nach einem der vorangehenden Ansprüche realisiert ist, **dadurch gekennzeichnet, dass** in einer unteren Blasposition der Düse (22), in der der innere Ringabschnitt der Unterseite (58) gegen die Abstützwand (24) der Form (20) abgestützt ist, der Umfang (44) der Öffnung zum Auslass (34) über der Abstützseite der Form dergestalt positioniert ist, dass ein senkrechtes Spiel zwischen der Unterseite (36) der Düse (22) und der Abstützseite (24) der Form (20) besteht.

10. Blasverfahren nach dem vorangehenden Anspruch, **dadurch gekennzeichnet, dass**, wenn sich die Düse (22) in unterer Blasposition befindet und sie kein Fluid unter Druck bläst, ein senkrechtes Spiel (j1) zwischen der Dichtung (40) und der Abstützseite (24) der Form (20) besteht.

## Claims

1. Plant (10) for blowing a pressurized fluid into a blank (12), especially into a blank for a PET container, which comprises:
- a lower mould (20) which is intended to house the blank (12), and which comprises an upper horizontal wall (24) comprising an insertion orifice (28) through which an upper neck (16) of the blank (12) is intended to project;
- an upper nozzle (22) which comprises a lower outlet orifice (34) for the pressurized fluid which is intended to blow the pressurized fluid into the blank via the neck (16), and which comprises an annular seal (40) which is arranged under the lower circumference (44) of the outlet orifice (34);
of the type in which the circumference (44) of the outlet orifice (34) is intended to be positioned opposite a bearing wall (18, 24) while surrounding the neck (16) of the blank (12), the seal (40) being pressed against the bearing wall (18, 24) to prevent the pressurized fluid from leaking between the circumference (44) of the outlet orifice (34) of the nozzle (22) and bearing face (18, 24),
**characterized in that** the seal (40) comprises at least one first flexible annular lower lip (48) which extends radially towards the inside of the outlet orifice (34), so that the pressurized fluid presses on an upper face (54) of the lip (48) so as to pin the free inside circular edge (58) of the annular lip (48) against the bearing wall (18, 24) to ensure the sealing of the nozzle (22).

2. Blow-moulding plant (10) according to the preceding claim, **characterized in that** the bearing wall is formed by a collar (18) which extends horizontally around the neck (16) of the blank (12).

3. Blow-moulding plant (10) according to Claim 1, **characterized in that** the bearing wall is formed by the upper wall (24) of the mould (20).

4. Blow-moulding plant (10) according to any one of the preceding claims, **characterized in that** the seal (40) comprises an annular upper second lip (60) which is positioned in parallel above the lower first lip (48) and which is connected to the lower first lip (48) by an outer peripheral rim (46) of the seal (40).

5. Blow-moulding plant (10) according to the preceding claim, **characterized in that** the radial cross section of the seal (40) has a "U" shape of which the opening directed radially towards the inside of the nozzle (22) is bordered vertically by the lower first lip (48) and by the upper second lip (60).

6. Blow-moulding plant (10) according to any one of the preceding claims, **characterized in that** the inner cylindrical face (41) of the nozzle (22) comprises an annular groove (42) in which the seal (40) is housed.

7. Blow-moulding plant (10) according to the preceding claim, **characterized in that** an outer annular portion of the lower face (56) of the lower first lip (48) is pressed against a lower wall (45) of the annular groove (42).

8. Blow-moulding plant (10) according to the preceding claim, **characterized in that** the free inner circular edge (50) of the lower first lip (48) forms an annular projection which extends vertically downwards relative to a lower face (36) of the nozzle (22) and which is intended to be pressed against the bearing wall (18, 24) when the pressurized fluid presses on the upper face (54) of the lower first lip (48).

9. Blowing process using a blow-moulding plant (10) produced according to any one of the preceding claims, **characterized in that**, in a low blowing position of the nozzle (22) in which the inner annular portion of the lower face (58) is pressed against the bearing face (24) of the mould (20), the circumference (44) of the outlet orifice (34) is positioned above the bearing face of the mould so that there is a vertical gap between the lower face (36) of the nozzle (22) and the bearing face (24) of the mould (20).

10. Blowing process according to the preceding claim, **characterized in that**, when the nozzle (22) is in the low blowing position and when it does not blow pressurized fluid, there is a vertical gap (j1) between the seal (40) and the bearing face (24) of the mould (20).
